# EUROPEAN PATENT APPLICATION

(11) **EP 4 636 726 A1**
(43) Date of publication of application: **22.10.2025**
(21) Application number: 22968436.0
(22) Date of filing: 13.12.2022
(51) Int. Cl.: G08G 1/00, G08G 1/09, G08G 1/0968

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: NAGASE, Taro, Tokyo 112-0002 (JP); ITO, Yuji, Kawagoe-shi, Saitama 350-8555 (JP); KAGAWA, Ryohei, Kawagoe-shi, Saitama 350-8555 (JP); TAKAGAKI, Yukihide, Kawagoe-shi, Saitama 350-8555 (JP); TANAKA, Akihiro, Kawagoe-shi, Saitama 350-8555 (JP)
(74) Representative: Hoffmann Eitle
(86) International application number: PCT/JP2022/045931
(87) International publication number: WO 2024/127524

(57) **Abstract**

An information processing apparatus (100) according to the present application includes an estimation unit (132) that estimates, based on a scheduled travel route that is a route in which a vehicle is scheduled to travel, an operation load type for each of road sections that are included in the scheduled travel route, and a generation unit (133) that generates information that indicates a change point at which the operation load type is changed in the scheduled travel route, based on a current location of the vehicle, a distance of each of the road sections, and the operation load type of each of the road sections.

## Description

### Field

The present invention relates to an information processing apparatus, an information processing method, and an information processing program.

### Background

Conventionally, a technology for providing information by voice while having a dialogue with a user has been proposed.

### Citation List

### Patent Literature

Japanese Laid-open Patent Publication No. 2018-06338

### Summary

### Technical Problem

However, in the conventional technology as described above, there is room for improvement in realizing scheduling for outputting a content at an appropriate timing. For example, in the conventional technology as described above, a driving margin is determined based on a current driving situation and a content is output when the driving margin is high.

When the content is output based on the driving margin that corresponds to the current driving situation as described above, output of the content may be put off or interrupted in accordance with change in the driving margin, and there is a problem in that it becomes difficult to output the content at a necessary timing.

To cope with this, it is needed to appropriately schedule an output timing such that the content can be output at an appropriate timing; however, in the conventional technology as described above, output of the content is controlled only in accordance with the current driving margin.

The present invention has been conceived in view of the foregoing situations, and provides an information processing apparatus, an information processing method, and an information processing program capable of realizing scheduling for outputting a content at an appropriate timing.

### Solution to Problem

An information processing apparatus comprising: an estimation unit that estimates, based on a scheduled travel route that is a route in which a vehicle is scheduled to travel, an operation load type for each of road sections that are included in the scheduled travel route; and a generation unit that generates information that indicates a change point at which the operation load type is changed in the scheduled travel route, based on a current location of the vehicle, a distance of each of the road sections, and the operation load type of each of the road sections.

An information processing method that is implemented by an information processing apparatus, the information processing method comprising: an estimation step of estimating, based on a scheduled travel route that is a route in which a vehicle is scheduled to travel, an operation load type for each of road sections that are included in the scheduled travel route; and a generation step of generating information that indicates a change point at which the operation load type is changed in the scheduled travel route, based on a current location of the vehicle, a distance of each of the road sections, and the operation load type of each of the road sections.

An information processing program that is implemented by an information processing apparatus, the information processing program causing the information processing apparatus to perform: an estimation step of estimating, based on a scheduled travel route that is a route in which a vehicle is scheduled to travel, an operation load type for each of road sections that are included in the scheduled travel route; and a generation step of generating information that indicates a change point at which the operation load type is changed in the scheduled travel route, based on a current location of the vehicle, a distance of each of the road sections, and the operation load type of each of the road sections.

### Brief Description of Drawings

FIG. 1 is a diagram illustrating an example of a system according to one embodiment.
FIG. 2 is a schematic view illustrating an example of operation of a server apparatus.
FIG. 3 is a schematic view illustrating an example of operation of an on-vehicle device.
FIG. 4 is a diagram illustrating configuration examples of the server apparatus and the on-vehicle device according to one embodiment.
FIG. 5 is a diagram illustrating a specific example of a WL type estimation method.
FIG. 6 is a diagram illustrating a specific example of a method of generating change point information.
FIG. 7 is a flowchart illustrating the flow of generation of the change point information.
FIG. 8 is a flowchart illustrating the flow of a process related to re-generation of the change point information and distribution of the change point information.
FIG. 9 is a flowchart illustrating the flow of a scheduling process.
FIG. 10 is a diagram illustrating a specific example of the scheduling process according to one embodiment.
FIG. 11 is a hardware configuration diagram illustrating an example of a computer that implements functions of the server apparatus.

### Description of Embodiments

### Embodiment

Embodiments of the present invention will be described in detail below based on the drawings. Meanwhile, an information processing apparatus, an information processing method, and an information processing program according to the present invention are not limited by the embodiments below. In addition, in the embodiments below, the same components are denoted by the same reference symbols, and repeated explanation will be omitted.

### 1. System configuration

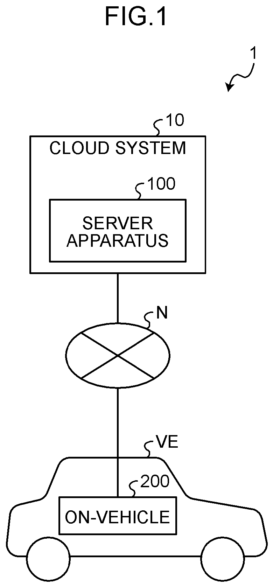

A configuration of a system according to one embodiment will be described below with reference to FIG. 1. FIG. 1 is a diagram illustrating an example of the system according to one embodiment. FIG. 1 illustrates a system 1 as one example of the system according to one embodiment. Information processing according to one embodiment may be performed by the system 1.

As illustrated in FIG. 1, the system 1 may include a cloud system 10 and an on-vehicle device 200. Further, the cloud system 10 and the on-vehicle device 200 may be communicably connected to each other via a network N in a wired or wireless manner.

The cloud system 10 includes a server apparatus 100 that is a central apparatus for performing the information processing according to one embodiment. The server apparatus 100 is an apparatus that estimates an operation load type for each of road sections that are included in a scheduled travel route that is a route in which a vehicle VE is scheduled to travel. Further, the server apparatus 100 generates information that indicates a change point at which the operation load type is changed in the scheduled travel route, based on a current location of the vehicle VE, a distance of each of the road sections, and the operation load type that is estimated for each of the road sections.

Furthermore, the server apparatus 100 determines, based on a travel state of the vehicle, whether or not the operation load type at a current time with respect to a driver of the vehicle VE is changed, and re-generates information that indicates the change point when the operation load type is changed. Moreover, the server apparatus 100 distributes the re-generated information that indicates the change point to the on-vehicle device 200.

The on-vehicle device 200 may be a dedicated navigation device that is built in or mounted on the vehicle VE. For example, the on-vehicle device 200 may include a navigation device and a recording device. As one example, the on-vehicle device 200 may be a composite device in which a navigation device and a recording device that are independent of each other are communicably connected to each other. As another example, the on-vehicle device 200 may be a single device that includes a navigation function and a recording function.

Further, the on-vehicle device 200 may include various kinds of sensors. For example, the on-vehicle device 200 may include various kinds of sensors, such as a camera, an acceleration sensor, a gyro sensor, a Global Positioning System (GPS) sensor, or an atmospheric pressure sensor. In view of the above, the on-vehicle device 200 may have a function to provide a dialog or information for supporting driving based on sensor information that is acquired by various kinds of sensors.

Furthermore, the on-vehicle device 200 may use sensor information that is detected by a sensor that is installed, as a safe traveling system, in the vehicle VE, in addition to the sensor that is installed in the subject device.

Moreover, the driver may install predetermined application software in a mobile terminal device (for example, a smartphone, a tablet terminal, a notebook personal computer (PC), a portable digital assistant (PDA), or the like) that the driver uses on a daily basis, and cause the mobile terminal device to operate in the same manner as the on-vehicle device 200.

### 2. Overview of server apparatus

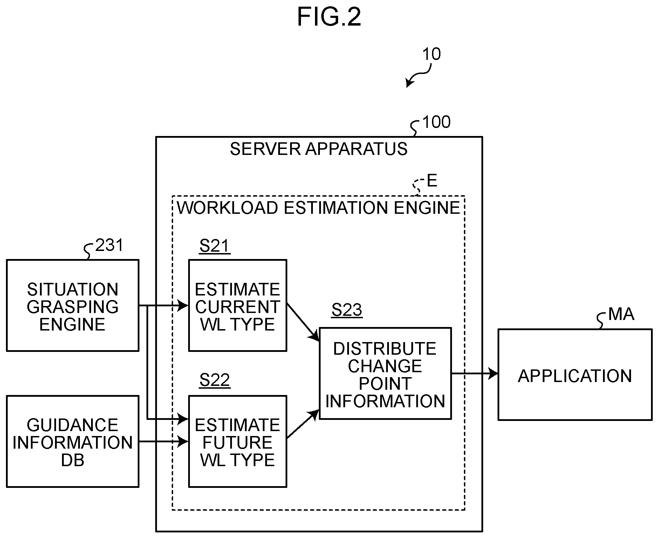

An example of operation of the server apparatus 100 will be described below with reference to FIG. 2. FIG. 2 is a schematic view illustrating an example of operation of the server apparatus 100. In the example illustrated in FIG. 2, the cloud system 10 may include the server apparatus 100 that has a workload estimation engine E, a situation grasping engine 231, a guidance information DB, and an application MA.

Meanwhile, a workload (WL) described herein indicates an operation load, and may include both of a feeling of burden of the driver (also referred to as a degree of difficulty) and an operation load that is determined for a road section.

An operation load type includes, for example, "BUSY", "IDEAL", "FREE", and the like, where it is indicated that a burden on the driver in a road section in which "BUSY" is set is equal to or larger than a reference (that is, a degree of difficulty in driving is high), a burden on the driver in a road section in which "FREE" is set is smaller than the reference (that is, the degree of difficulty in driving is low or not high), and a burden on the driver in a road section in which "IDEAL" is set is medium (that is, the degree of difficulty in driving is normal or not high).

Furthermore, the degree of difficulty for the driver may be a numerical value that represents the feeling of burden of the driver, and may be defined as follows.

For example, the degree of difficulty of "1" corresponds to an operation load type of "BUSY_MAX", which indicates a road section in which all of normal drivers become careful with driving, and it is defined that, in this road section, the on-vehicle device 200 is requested to utter only a warning notice.

The degree of difficulty of "0.80" corresponds to an operation load type of "BUSY+", which indicates a road section in which 60% or more of normal drivers become careful with driving, and it is defined that, in this road section, the on-vehicle device 200 is requested to utter only the warning notice and a caution notice.

The degree of difficulty of "0.60" corresponds to an operation load type of "BUSY", which indicates a rode section in which 20% or more of normal drives become careful with driving, and it is defined that, in this road section, the on-vehicle device 200 is requested to utter only the warning notice, the caution notice, and an important notice.

The degree of difficulty of "0.50" corresponds to an operation load type of "IDEAL", and it is defined that, in this road section, the on-vehicle device 200 is allowed to utter a content other than a guidance related content (the warning notice, the caution notice, and the important notice).

The degree of difficulty of "0.25" corresponds to an operation load type of "FREE", which indicates a rode section in which 50% or more of normal drives feel monotonous and boring, and it is defined that various kinds of contents are to be uttered.

Meanwhile, the operation load type is not limited to the examples as described above ("BUSY_MAX", "BUSY+", "BUSY", "IDEAL", and "FREE"). Further, in the embodiments described below, the operation load type will be referred to as a "WL type", and "BUSY" and "FREE" will be used in the explanation. Furthermore, the reference and reference values described above are mere examples, and may be set to arbitrary values.

The road section will be described below. For example, the road section indicates a section between feature points in a road, and is referred to as a link. The features points of the road include an intersection, a corner, a dead end, and the like, and referred to as nodes. Specifically, the link indicates a road section that is set based on a predetermined rule. In other words, the link indicates a unit that is obtained by separating a section, in which a movement history is recorded, based on a predetermined rule.

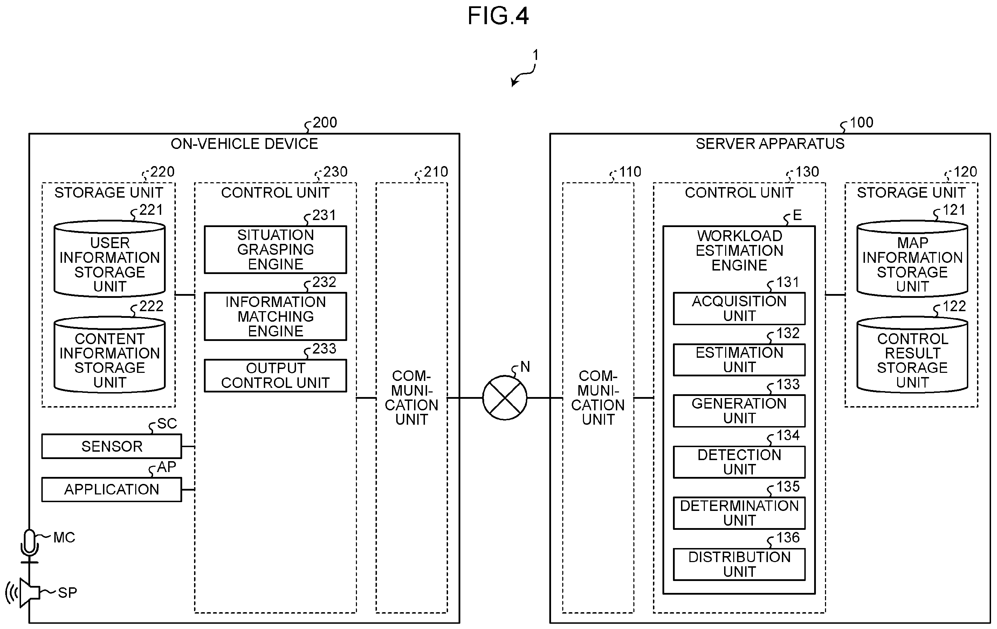

Following the examples as described above, a road section will be referred to as a link and a connection point between road sections will be referred to as a node in the embodiments described below. For example, the server apparatus 100 includes a map information storage unit 121 (FIG. 4), and the map information storage unit 121 stores therein road data in which a road network is represented by a combination of nodes and links, facility data, object information around a road, or the like. The object information includes information on a signboard, such as a road sign, a road marking, such as a stop line, a road marking line, such as a center line, things on the ground, such as a structural object along the road, and an obstacle that is temporarily present. The obstacle indicates, for example, an object, such as a puddle, cave-in in the road, a fallen object, or a drain (including a portion closed by mesh), that may obstruct paths of pedestrians or bicycles. The object information may include highly-accurate point cloud information on an object that is used to estimate a position of a subject vehicle, or the like. Further, in the map information storage unit 121, the link may be identified by a link ID.

The situation grasping engine 231 is a cloud service that collects an analysis result, which is obtained by analyzing sensor information that is obtained by the sensor included in the on-vehicle device 200, or situation information, which includes operating statuses of various kinds of applications that are installed in the on-vehicle device 200, and distributes accumulated information as the situation information. In the example illustrated in FIG. 2, the situation grasping engine 231 is included in the cloud system 10, but the on-vehicle device 200 may include the situation grasping engine 231.

The guidance information DB stores therein guidance information that is used to guide a route that is set in accordance with a destination of the driver, guidance information that is used to guide a route that is set again (re-routed) because the vehicle VE has deviated the set route, or the like.

The application MA has a function to distribute a result that is processed by the workload estimation engine E to an information matching engine 232 that is included in the on-vehicle device 200.

A specific operation example of the workload estimation engine E will be described below. The workload estimation engine E performs information processing according to one embodiment.

First, the workload estimation engine E acquires the situation information from the situation grasping engine 231, and estimates an operation load type (WL type) of the vehicle VE at the current time based on the acquired situation information (Step S21). For example, the workload estimation engine E may estimate, as the WL type of the vehicle VE at the current time, a road section in which the vehicle VE is currently traveling, that is, a degree of difficulty (operation load) of a driver (referred to as a driver D) in a current link.

Further, the workload estimation engine E estimates a future operation load type (WL type) of the vehicle VE (Step S22). Specifically, the workload estimation engine E estimates (predicts) the WL type for each of links that are included in the scheduled travel route that is a route in which the vehicle VE is scheduled to travel.

For example, the workload estimation engine E may compare the scheduled travel route and map data (the map information storage unit 121) in which the WL type is associated with each of the links, and estimate the WL type for each of the links that are included in the scheduled travel route.

Here, when the driver D designates a destination, the workload estimation engine E may set a route to the destination as the scheduled travel route based on a route plan for the destination. Therefore, in this case, the workload estimation engine E may refer to the guidance information DB and estimate the WL type based on unique information that is not obtained by map data in which only the WL type is associated. As one example, in some cases, the workload estimation engine E may detect, with reference to the guidance information DB, an attribute of a first link that is a link in which the vehicle VE is currently traveling and an attribute of a second link that is located in a traveling direction of the vehicle VE and that is connected to the first link. For example, when the workload estimation engine E refers to the guidance information DB and if it is possible to detect a "wide road" as the attribute of the first link and a "narrow road" as the attribute of the second link, it is possible to predict the WL type based on a comparison between the "wide road" that is the attribute of the first link and the "narrow road" that is the attribute of the second link.

Furthermore, when the driver D does not designate a destination and it is impossible to set a route corresponding to a destination, the workload estimation engine E need not perform a process of predicting the WL type for each of the links that are included in the scheduled travel route. In contrast, when it is impossible to set a route as described above, the workload estimation engine E may predict a travel route based on a travel history of the vehicle VE and set a predicted travel route as the scheduled travel route.

Meanwhile, at Step S22, the workload estimation engine E calculates an estimated time at which the vehicle VE is expected to arrive at a node that is included in the scheduled travel route, based on an estimation result (prediction result). The estimated time is one example of information (change point information) that indicates a change point at which the WL type is changed, and details thereof will be described later.

Referring back to Step S21, the workload estimation engine E monitors a change of the WL type (the degree of difficulty of the driver D) of the vehicle VE at the current time based on the travel state of the vehicle VE (the situation information that is acquired from the information matching engine 232) while the vehicle VE is travelling.

As a result, the workload estimation engine E performs comparison with, for example, the WL type that is estimated at a previous timing, and if it is determined that the WL type of the vehicle VE at the current time is changed, the workload estimation engine E re-calculates the estimated time at which the vehicle VE is expected to arrive at the node that is included in the scheduled travel route. That is, the workload estimation engine E re-calculates the change point information when it is determined that the WL type of the vehicle VE at the current time is changed. Further, the workload estimation engine E distributes the change point information as a re-calculation result to the application MA (Step S23). The application MA distributes the change point information that is acquired from the workload estimation engine E to the on-vehicle device 200. Specifically, the application MA distributes the change point information that is acquired from the workload estimation engine E to the information matching engine 232.

### 3. Overview of on-vehicle device

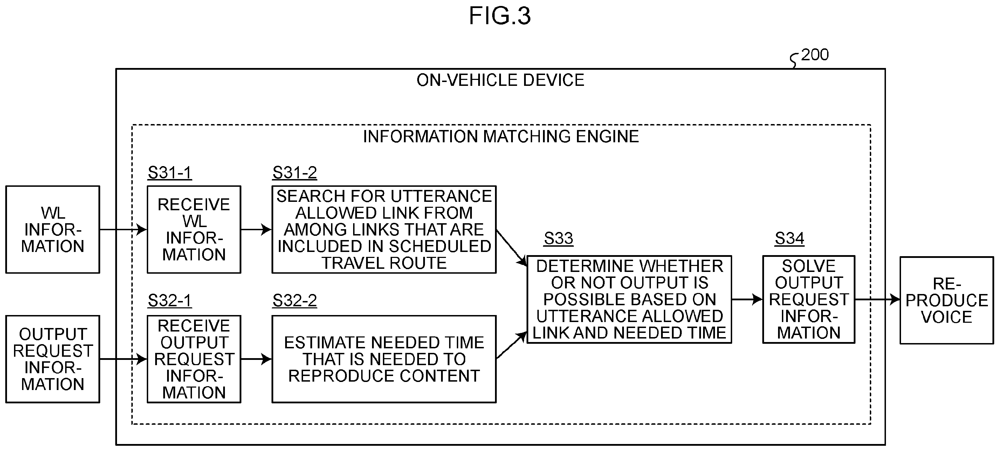

An example of operation of the on-vehicle device 200 will be described below with reference to FIG. 3. FIG. 3 is a schematic view illustrating an example of operation of the on-vehicle device 200. In the example illustrated in FIG. 3, the on-vehicle device 200 includes the information matching engine 232.

First, the information matching engine 232 receives WL information (Step S31-1). The WL information described herein is the change point information that is distributed by the server apparatus 100, that is, information on the estimated time at which the vehicle VE is expected to arrive at the node that is included in the scheduled travel route.

Subsequently, the information matching engine 232 searches for a link (utterance allowed link) for which it is determined that voice output of a content is allowed, from among the links that are included in the scheduled travel route (Step S31-2). For example, the information matching engine 232 may search for a link for which the WL type is estimated as "FREE", as the link for which it is determined that voice output of a content is allowed, from among the links that are included in the scheduled travel route.

Furthermore, the information matching engine 232 further determines whether or not output request information is received in a different phase from Step S31-1 and Step S31-2. The output request information described herein is output request information that is transmitted by various kinds of applications that are installed in the on-vehicle device 200. For example, in some cases, an application that provides a content related to tourist information may transmit output request information that includes an output condition (a time condition for allowing output or a geographical condition for allowing output) and an output target content to the information matching engine 232.

When receiving the output request information (Step S32-1), the information matching engine 232 estimates a needed time that is needed to reproduce a content that is included in the output request information (Step S32-2). For example, the information matching engine 232 may estimate the needed time based on a reproduction duration of the content that is included in the output request information.

Subsequently, the information matching engine 232 determines whether or not it is possible to output the content that is included in the output request information based on the utterance allowed link that is retrieved at Step S31-2 and the needed time that is estimated at Step S31-2 (Step S33). For example, the information matching engine 232 may determine that it is possible to output the content that is included in the output request information when a duration of the utterance allowed link is sufficiently longer than the needed time.

Then, the information matching engine 232 performs a control process for solving the output request information (Step S34). The control process for solving the output request information is a basic process that is performed by the information matching engine 232 and indicates scheduling for determining a content output timing so as to meet the output condition that is included in the output request information.

As a result of the scheduling that is performed by the information matching engine 232, if the content output timing is determined, a speaker (FIG. 4) that is included in the on-vehicle device 200 outputs the content by voice.

### 4. Functional configurations

Configuration examples of the server apparatus 100 and the on-vehicle device 200 will be described below with reference to FIG. 4. FIG. 4 is a diagram illustrating configuration examples of the server apparatus 100 and the on-vehicle device 200 according to one embodiment.

### Server apparatus 100

A configuration example of the server apparatus 100 will be described below. As illustrated in FIG. 4, the server apparatus 100 includes a communication unit 110, a storage unit 120, and a control unit 130.

### Communication unit 110

The communication unit 110 is implemented by, for example, a Network Interface Card (NIC) or the like. Further, the communication unit 110 is connected to a network N in a wired or wireless manner, and transmits and receives information to and from, for example, the on-vehicle device 200.

### Storage unit 120

The storage unit 120 is implemented by, for example, a semiconductor memory device, such as a Random Access Memory (RAM) or a flash memory, or a storage device, such as a hard disk or an optical disk. The storage unit 120 may store therein, for example, data or a program that is related to information processing according to one embodiment. Further, in the example illustrated in FIG. 4, the storage unit 120 may include a map information storage unit 121 and a control result storage unit 122.

### Map information storage unit 121

The map information storage unit 121 stores therein map data that is used to estimate the WL type. The map data includes road data that represents a road network by a combination of a node and a link, or the like. The link is managed by a link ID, and may be associated with the WL type or a link length.

### Control result storage unit 122

The control result storage unit 122 may store therein information (for example, a current WL type, a future WL type, change point information, or the like) that is obtained by the workload estimation engine E.

### Control unit 130

The control unit 130 is implemented by causing a Central Processing Unit (CPU), a Micro Processing Unit (MPU), or the like to execute various kinds of programs (for example, the information processing program according to one embodiment) that are stored in an internal storage device of the server apparatus 100 by using a RAM as a work area. Further, the control unit 130 is implemented by, for example, an integrated circuit, such as an Application Specific Integrated Circuit (ASIC) or a Field Programmable Gate Array (FPGA).

As illustrated in FIG. 4, the workload estimation engine E is mounted on the control unit 130, the workload estimation engine E includes an acquisition unit 131, an estimation unit 132, a generation unit 133, a detection unit 134, a determination unit 135, and a distribution unit 136, and implements or executes functions and operation of information processing as described below. Meanwhile, an internal configuration of the workload estimation engine E is not limited to the configuration as illustrated in FIG. 4, and it may be possible to adopt a different configuration as long as the information processing as described below is performed. Further, a connection relationship among the processing units that are included in the workload estimation engine E is not limited to the connection relationship as illustrated in FIG. 4, and it may be possible to adopt a different connection relationship.

### Acquisition unit 131

The acquisition unit 131 acquires information that indicates a travel route of the vehicle. For example, the acquisition unit 131 may acquire, as the information that indicates the travel route of the vehicle VE, information on the scheduled travel route that is a route in which the vehicle VE is scheduled to travel.

For example, when the driver D designates a destination, the acquisition unit 131 sets a route to the destination as the scheduled travel route based on a route plan for the destination. As a result, the acquisition unit 131 acquires information that indicates the set scheduled travel route.

Furthermore, when the driver D does not designate a destination and it is impossible to set a route corresponding to the destination, the acquisition unit 131 may predict a travel route based on the travel history of the vehicle VE and set the predicted travel route as the scheduled travel route. In this case, the acquisition unit 131 acquires information that indicates the predicted scheduled travel route.

### Estimation unit 132

The estimation unit 132 estimates the WL type. For example, the estimation unit 132 estimates, as the WL type of the vehicle VE at the current time, a road section in which the vehicle VE is currently traveling, that is, a degree of difficulty (degree of difficulty in driving) of the driver D in the current link. For example, the estimation unit 132 may acquire the situation information from the situation grasping engine 231, and estimate the degree of difficulty of the driver D based on the acquired situation information. Furthermore, the estimation unit 132 may compare the current link and the map data in which the WL type is associated with each of the links, and estimate the degree of difficulty of the driver D based on the WL type that is associated with the current link.

Furthermore, the estimation unit 132 estimates, as a future WL type of the vehicle VE, the WL type for each of links that are included in the scheduled travel route that is a route in which the vehicle VE is scheduled to travel. For example, the estimation unit 132 may compare the scheduled travel route and the map data in which the WL type is associated with each of the links, and predict the WL type for each of the links that are included in the scheduled travel route.

Meanwhile, the estimation unit 132 may estimate the WL type independently of the map data in which the WL type is associated with each of the links. For example, the estimation unit 132 may statistically estimate the WL type based on a travel history for each of the links. As one example, the estimation unit 132 may estimate the WL type of "BUSY" for a link in which sudden braking tends to occur as a result of analysis of the travel histories. Moreover, the estimation unit 132 may estimate the WL type based on a driving difficulty level that is calculated from an attribute of the link. For example, the estimation unit 132 may determine that the driving difficulty level is high in a link that includes a sharp curve or a link that includes a steep slope, and estimate the WL type of "BUSY" for the link.

Furthermore, the estimation unit 132 may estimate the WL type by using the guidance information DB. For example, it is assumed that the estimation unit 132 acquires a route guidance corresponding to the scheduled travel route from the guidance information DB, and a detail of the route guidance is "road width is narrowed from a oo point ahead". In this case, the estimation unit 132 is able to obtain the "wide road" as the attribute of the first link that is the link in which the vehicle VE is currently traveling and the "narrow road" as the attribute of the second link that is located in the traveling direction of the vehicle VE and that is connected to the first link, and may estimate the WL type based on a comparison between the attributes. For example, in general, the driving difficulty level in the "narrow road" is considered to be higher than in the "wide road", and therefore, the estimation unit 132 may estimate the WL type of "FREE" for the first link that is the link in which the vehicle VE is currently traveling and estimate the WL type of "BUSY" for the second link that is located in the traveling direction of the vehicle VE and that is connected to the first link.

### Generation unit 133

The generation unit 133 generates information that indicates a change point at which the WL type is changed in the scheduled travel route, based on the current location of the vehicle VE, a distance of each of the links that are included in the scheduled travel route, and the WL type of each of the links.

For example, when links that are adjacent to each other are estimated to have different WL types among the links that are included in the scheduled travel route, the generation unit 133 may generate, as the information that indicates the change point, distance information that indicates a distance from the current location of the vehicle VE to a connection point, that is, a node, at which the links that are adjacent to each other are connected.

Furthermore, when the links that are adjacent to each other are estimated to have different WL types among the links that are included in the scheduled travel route, the generation unit 133 may generate, as the information that indicates the change point, time information that indicates an estimated time of arrival of the vehicle VE from the current location of the vehicle VE at the node at which the links that are adjacent to each other are connected.

Moreover, the information that indicates the change point may include type information that indicates the WL type of the link in which the vehicle VE is currently traveling.

### Detection unit 134

The detection unit 134 detects a change of a traveling scene based on the travel state of the vehicle VE. For example, the detection unit 134 detects, as the change of the traveling scene, a change of a driving behavior of the vehicle VE. As one example, the detection unit 134 may detect, as the change of the driving behavior of the vehicle VE, a large decrease in velocity, a large increase in velocity, temporary stop, stop, slow driving, a curve, sudden start, sudden braking, sharp turn, shock, or the like.

Furthermore, the detection unit 134 may detect, as the change of the traveling scene, whether or not the vehicle VE has entered a spot that corresponds to the change point at which the WL type is changed. Specifically, when the links that are adjacent to each other are estimated to have different WL types, the detection unit 134 detects whether or not the vehicle VE has entered a node that is the connection point at which the links that are adjacent to each other are connected.

Moreover, the detection unit 134 may detect, as the change of the traveling scene, an attribute change based on a comparison between the attribute of the first link in which the vehicle VE is currently traveling and the attribute of the second link that is located in the traveling direction of the vehicle VE and that is connected to the first link among the links that are included in the scheduled travel route. For example, the detection unit 134 may detect entering a wide road from a narrow road, entering a narrow road from a wide road, or entering a road within a living area from a road out of the living area.

Furthermore, the detection unit 134 may detect, as the change of the traveling scene, whether or not the vehicle VE has entered an area that corresponds to a predetermined feature spot that is present in the first link in which the vehicle VE is currently traveling among the links that are included in the scheduled travel route. The feature spot described herein is, for example, an intersection, a junction, a road juncture, a toll gate, a railroad crossing, or the like.

Moreover, the detection unit 134 may detect, for example, whether or not a road in which the vehicle VE is currently traveling is an expressway or whether or not a road in which the vehicle VE is currently traveling is a road with the same tendency in which the attribute does not change (for example, a straight road), in addition to the examples as described above.

### Determination unit 135

The determination unit 135 determines whether or not the WL type of the vehicle VE at the current time is changed based on the travel state of the vehicle VE. For example, the determination unit 135 may determine, as the WL type of the vehicle VE at the current time, whether or not the degree of difficulty of the driver D in the link in which the vehicle VE is currently traveling is changed. For example, the determination unit 135 may determine whether or not the degree of difficulty of the driver D in the link in which the vehicle VE is currently traveling is changed based on whether or not the detection unit 134 has detected the change of the traveling scene.

For example, when it is detected that the driving behavior of the vehicle VE is changed, the determination unit 135 may determine that the degree of difficulty of the driver D is changed.

Furthermore, when it is detected that the vehicle VE has entered a spot (node) that corresponds to the change point at which the WL type is changed, the determination unit 135 may determine that the degree of difficulty of the driver D is changed.

Moreover, when it is detected that the attribute is changed between the attribute of the first link in which the vehicle VE is currently traveling and the attribute of the second link that is located in the traveling direction of the vehicle VE and that is connected to the first link, the determination unit 135 may determine that the degree of difficulty of the driver D is changed.

Furthermore, when it is detected that the vehicle VE has entered an area that corresponds to the predetermined feature spot, the determination unit 135 may determine that the degree of difficulty of the driver D is changed.

Meanwhile, when it is determined that the WL type of the vehicle VE at the current time is changed (the degree of difficulty of the driver D is changed), the generation unit 133 re-generates the change point information (for example, the estimated time at which the vehicle VE is expected to arrive at the node that is included in the scheduled travel route) that is generated in advance based on the estimation result that is obtained by the estimation unit 132.

### Distribution unit 136

The distribution unit 136, when the WL type of the vehicle VE at the current time is changed, distributes information that indicates the change point at which the WL type is changed in the scheduled travel route to the on-vehicle device 200.

### Summary of server apparatus 100

When it is determined that the degree of difficulty of the driver D is changed based on detection of the change of the traveling scene by the detection unit 134, it is indicated that there is a possibility that an error has occurred in the change point information (estimated time) that is once generated. Further, if the content output timing is determined based on the change point information that includes the error, a content that is supposed to be output in a link with the WL type of "FREE" may be output in a link with the WL type of "BUSY", which may disturb driving of the driver D. Furthermore, output of the content may be put off or interrupted.

To cope with this, when it is determined that the degree of difficulty of the driver D is changed in accordance with the change of the traveling scene, the generation unit 133 re-calculates the change point information again. As a result, it is possible to perform, for the on-vehicle device 200, scheduling using highly accurate change point information in which an error is further reduced, so that it is possible to perform scheduling for outputting a content at an appropriate timing.

Meanwhile, to perform scheduling using highly accurate change point information in which an error is further reduced for the on-vehicle device 200, it is preferable to appropriately generate latest change point information and distribute the generated change point information to the on-vehicle device 200, independently of the change of the traveling scene. However, in this case, the number of times of distribution of the change point information by the server apparatus 100 increases, and it becomes difficult to meet needs to output a content at an appropriate timing while reducing a communication volume, which is a problem. To cope with this, only when it is determined that the degree of difficulty of the driver D is changed in accordance with the change of the traveling scene, that is, only when a need of re-calculation of the change point information is increased, the server apparatus 100 actually performs re-calculation, and distributes the change point information that is obtained by the re-calculation to the on-vehicle device 200. As a result, the server apparatus 100 is able to meet the need as described above.

### On-vehicle device 200

A configuration example of the on-vehicle device 200 will be described below with reference to FIG. 4. As illustrated in FIG. 4, the on-vehicle device 200 includes a microphone MC, a speaker SP, a sensor SC, an application AP, a communication unit 210, a storage unit 220, and a control unit 230.

### Microphone MC

The microphone MC is a sound collection device that collects sounds that occur in the vehicle VE. For example, the microphone MC collects a spoken voice that is spoken by the driver D.

### Speaker SP

The speaker SP corresponds to an output device that outputs various kinds of information by voice. For example, the speaker SP outputs content information in accordance with output control that is performed by the control unit 230.

### Sensor SC

The sensor SC detects various kinds of information on the vehicle VE, and sends detected sensor information to the situation grasping engine 231.

### Application AP

The application AP is an application that provides a content. For example, the application AP transmits output request information that includes an output condition (a time condition for allowing output or a geographical condition for allowing output) and an output target content to the information matching engine 232. Meanwhile, although not illustrated in FIG. 1, the system 1 may further include an application server that controls the application AP.

### Storage unit 220

The storage unit 220 is implemented by, for example, a semiconductor memory device, such as a RAM or a flash memory, or a storage device, such as a hard disk or an optical disk. The storage unit 220 may store therein, for example, data or a program that is related to information processing according to one embodiment. Further, in the example illustrated in FIG. 4, the storage unit 220 may include a user information storage unit 221 and a content storage unit 222.

### User information storage unit 221

The user information storage unit 221 stores therein various kinds of information that is related to a user (for example, the driver D) related to the vehicle VE. The user information storage unit 221 may store therein a user related to, the vehicle VE or may further store therein a travel history of the vehicle VE.

### Content storage unit 222

The content storage unit 222 stores therein a content that is provided by the application AP.

### Control unit 230

The control unit 230 is implemented by causing a CPU, an MPU, or the like to execute various kinds of programs (for example, the information processing program according to one embodiment) that are stored in an internal storage device of the on-vehicle device 200 by using a RAM as a work area. Further, the control unit 230 is implemented by, for example, an integrated circuit, such as an ASIC or an FPGA.

As illustrated in FIG. 4, the control unit 230 includes the situation grasping engine 231, the information matching engine 232, and an output control unit 233, and implements or executes functions and operation of information processing as described below. Meanwhile, an internal configuration of the control unit 230 is not limited to the configuration as illustrated in FIG. 4, and it may be possible to adopt a different configuration as long as the information processing as described below is performed. Further, a connection relationship among the processing units that are included in the control unit 230 is not limited to the connection relationship as illustrated in FIG. 4, and it may be possible to adopt a different connection relationship.

### Situation grasping engine 231

The situation grasping engine 231 identifies a situation related to the vehicle VE based on the sensor information. For example, the situation grasping engine 231 identifies the situation of the vehicle VE by detecting a voice or a state in the vehicle VE, a behavior of the vehicle VE, or the like. Further, the situation grasping engine 231 outputs situation information that indicates the identified situation to the information matching engine 232.

### Information matching engine 232

The information matching engine 232 searches for a link (utterance allowed link) in which output of a content by voice is determined to be allowed from among the links that are included in the scheduled travel route.

Furthermore, when receiving the output request information, the information matching engine 232 estimates a needed time that is needed to reproduce the content that is included in the output request information.

Moreover, the information matching engine 232 determines whether or not it is possible to output the content that is included in the output request information based on the utterance allowed link and the needed time.

Furthermore, the information matching engine 232 performs a scheduling process of determining the content output timing so as to meet the output condition that is included in the output request information.

### Output control unit 233

The output control unit 233 performs control such that the speaker SP outputs a content at the timing that is scheduled by the information matching engine 232.

### 5. WL type estimation method

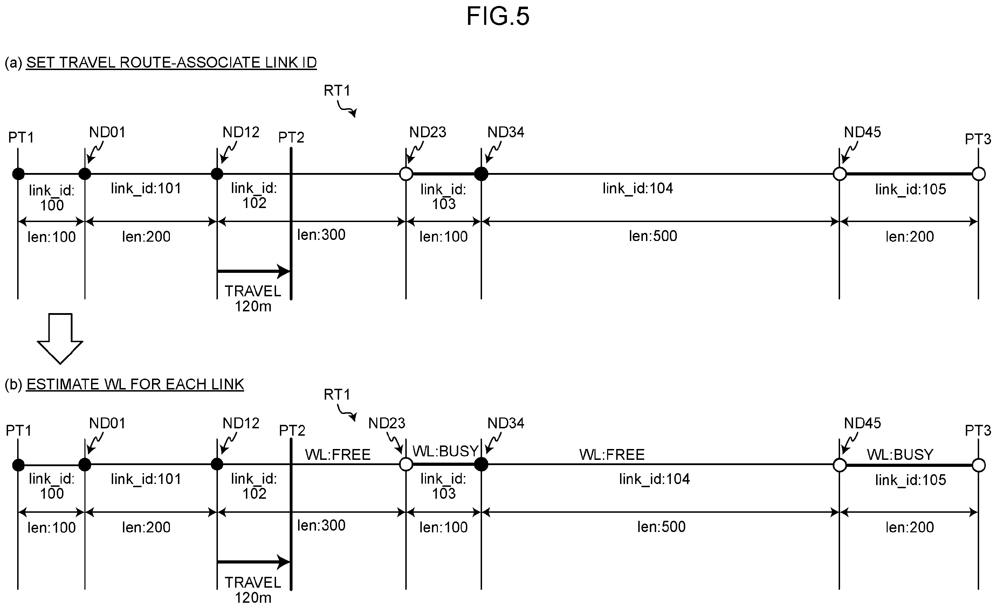

A WL type estimation method will be described in detail below with reference to FIG. 5. FIG. 5 is a diagram illustrating a specific example of the WL type estimation method. In FIG. 5, the WL type estimation method will be described by using a situation in which a travel route RT1 is drawn by a route plan for a destination.

Furthermore, as illustrated in FIG. 5, the travel route RT1 is a route that connects a departure place PT1 and a destination PT3, and a situation in which a WL type estimation process is started at a time point at which the vehicle VE is located at a location PT2. In this example, the location PT2 corresponds to a current location of the vehicle VE.

Here, in the example in (a) in FIG. 5, the estimation unit 132 compares the travel route RT1 and the map data in which the WL type is associated with each of the links, and associates a link ID (link_id) with each of the links that are included in the travel route RT1. In (a) in FIG. 5, an example is illustrated in which the estimation unit 132 associates a link ID of "100", a link ID of "101", a link ID of "102", a link ID of "103", a link ID of "104", and a link ID of "105" with the travel route RT1, so that the travel route RT1 is divided into five links.

Furthermore, in (a) in FIG. 5, a node ND01 is illustrated as information on a connection point at which a link (a link 100) that is identified by the link ID of "100" and a link (a link 101) that is identified by the link ID of "101" are connected.

Moreover, a node ND12 is illustrated as information on a connection point at which the link (the link 101) that is identified by the link ID of "101" and a link (a link 102) that is identified by the link ID of "102" are connected.

Furthermore, a node ND23 is illustrated as information on a connection point at which the link (the link 102) that is identified by the link ID of "102" and a link (a link 103) that is identified by the link ID of "103" are connected.

Moreover, a node ND34 is illustrated as information on a connection point at which the link (the link 103) that is identified by the link ID of "103" and a link (a link 104) that is identified by the link ID of "104" are connected.

Furthermore, a node ND45 is illustrated as information on a connection point at which the link (the link 104) that is identified by the link ID of "104" and a link (a link 105) that is identified by the link ID of "105" are connected.

Moreover, the estimation unit 132 may refer to the map data and calculate a distance (len) of each of the links. In (a) in FIG. 5, an example is illustrated in which the estimation unit 132 calculates a distance of "100" of the link 100, a distance of "200" of the link 101, a distance of "300" of the link 102, a distance of "100" of the link 103, a distance of "500" of the link 104, and a distance of "200" of the link 105.

In the state as described above, as illustrated in (b) in FIG. 5, the estimation unit 132 may estimate the WL types of the link that includes the current location PT2 of the vehicle VE, that is, the link 102 in which the vehicle VE is currently traveling, and the link 103, the link 104, and the link 105 in which the vehicle VE is scheduled to travel after the link 102. In (b) in FIG. 5, an example is illustrated in which the estimation unit 132 refers to the map data in which the WL type is associated with each of the links, and estimate the WL type of "FREE" for the link 102, the WL type of "BUSY" for the link 103, the WL type of "FREE" for the link 104, and the WL type of "BUSY" for the link 105.

Furthermore, although not illustrated in (b) in FIG. 5, the estimation unit 132 may estimate, as the WL type of the vehicle VE at the current time, the degree of difficulty of the driver D in the link 102 in which the vehicle VE is currently traveling.

### 6. Method of generating change point information

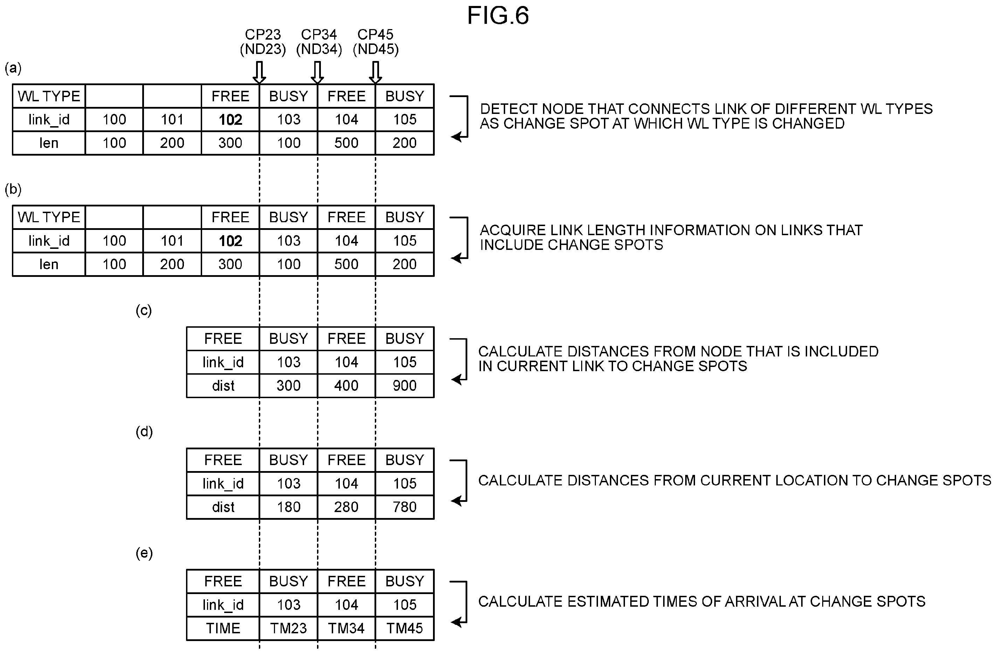

A method of generating information that indicates a change point at which the WL type is changed will be described in detail below with reference to FIG. 6. FIG. 6 is a diagram illustrating a specific example of a method of generating change point information. In FIG. 6, the method of generating the change point information will be described by using the same situation as illustrated in FIG. 5 as an example.

First, as illustrated in (a) in FIG. 6, the generation unit 133 detects a node that connects links of different WL types, as a change spot at which the WL type is changed. With reference to the example illustrated in FIG. 5, the node ND23 is a node that connects the link 102 with the WL type of "FREE" and the link 103 with the WL type of "BUSY". The node ND34 is a node that connects the link 103 with the WL type of "BUSY" and the link 104 with the WL type of "FREE". The node ND45 is a node that connects the link 104 with the WL type of "FREE" and the link 105 with the WL type of "BUSY". Therefore, the generation unit 133 detects, as the nodes that connect the links of the different WL types, the node ND23, the node ND34, and the node ND45, as the change spots at which the WL types are changed. In the following, the node ND23 may be described as a change spot CP23, the node ND34 may be described as a change spot CP34, and the node ND45 may be described as a change spot CP45.

Subsequently, as illustrated in (b) in FIG. 6, the generation unit 133 acquires a distance (link length information) of each of the links that include the change spots (CP23, CP34, CP45). The links that include the change spots (CP23, CP34, CP45) are the link 102, the link 103, the link 105, and the link 105, and therefore, the generation unit 133 acquires the distance of "300" of the link 102, the distance of "100" of the link 103, the distance of "500" of the link 104, and the distance of "200" of the link 105.

Subsequently, as illustrated in (c) in FIG. 6, the generation unit 133 calculates distances (dist) from the node ND12 that is included in the link 102 in which the vehicle VE is currently traveling to the change spots (CP23, CP34, CP45). The generation unit 133 calculates a distance of "300" from the node ND12 to the change spot CP23 because the distance of the link 102 is "300".

Furthermore, the generation unit 133 calculates a distance of "400" from the node ND12 to the change spot CP34 by adding the distance of "300" of the link 102 and the distance of "100" of the link 103. The generation unit 133 calculates a distance of "900" from the node ND12 to the change spot CP45 by adding the distance of "300" of the link 102, the distance of "100" of the link 103, and the distance of "500" of the link 104.

As illustrated in (d) in FIG. 6, the generation unit 133 calculates distances (dis) from the current location PT2 of the vehicle VE to the change spots (CP23, CP34, CP45). In the example illustrated in FIG. 5, the current location PT2 of the vehicle VE corresponds to a location at 120 meters (m) from the node ND12. Therefore, the generation unit 133 calculates a distance of "180" from the current location PT2 to the change spot CP23 by subtracting "120" from the distance of "300" from the node ND12 to the change spot CP23.

Furthermore, the generation unit 133 calculates a distance of "280" from the current location PT2 to the change spot CP34 by subtracting "120" from the distance of "400" from the node ND12 to the change spot CP34. The generation unit 133 calculates a distance of "780" from the current location PT2 to the change spot CP45 by subtracting "120" from the distance of "900" from the node ND12 to the change spot CP45.

Here, the generation unit 133 determines, as pieces of information that indicate the change points, the distance of "180" from the current location PT2 to the change spot CP23, the distance of "280" from the current location PT2 to the change spot CP34, and the distance of "780" from the current location PT2 to the change spot CP45.

Specifically, the generation unit 133 generates the distance of "180" from the current location PT2 to the change spot CP23 as the change point information that indicates the change spot CP23. Further, the generation unit 133 generates the distance of "280" from the current location PT2 to the change spot CP34 as the change point information that indicates the change spot CP34. Furthermore, the generation unit 133 generates the distance of "780" from the current location PT2 to the change spot CP45 as the change point information that indicates the change spot CP45.

As illustrated in (e) in FIG. 6, the generation unit 133 calculates estimated times at which the vehicle VE arrives at the change spots (CP23, CP34, CP45) based on the distances (dist) form the current location PT2 of the vehicle VE to the change spots (CP23, CP34, CP45) and a velocity of the vehicle VE. In (e) in FIG. 6, an example is illustrated in which the generation unit 133 calculates an estimated time "TM23" at which the vehicle VE arrives at the change spot CP23, an estimated time "TM34" at which the vehicle VE arrives at the change spot CP34, and an estimated time "TM45" at which the vehicle VE arrives at the change spot CP45.

Here, the generation unit 133 determines the estimated time "TM23", the estimated time "TM34", and the estimated time "TM45" as pieces of information that indicates the change points. Specifically, the generation unit 133 generates the estimated time "TM23" as the change point information that indicates the change spot CP23. Further, the generation unit 133 generates the estimated time "TM34" as the change point information that indicates the change spot CP34. Furthermore, the generation unit 133 generates the estimated time "TM45" as the change point information that indicates the change spot CP45.

### 7. Flow of generation of change point information

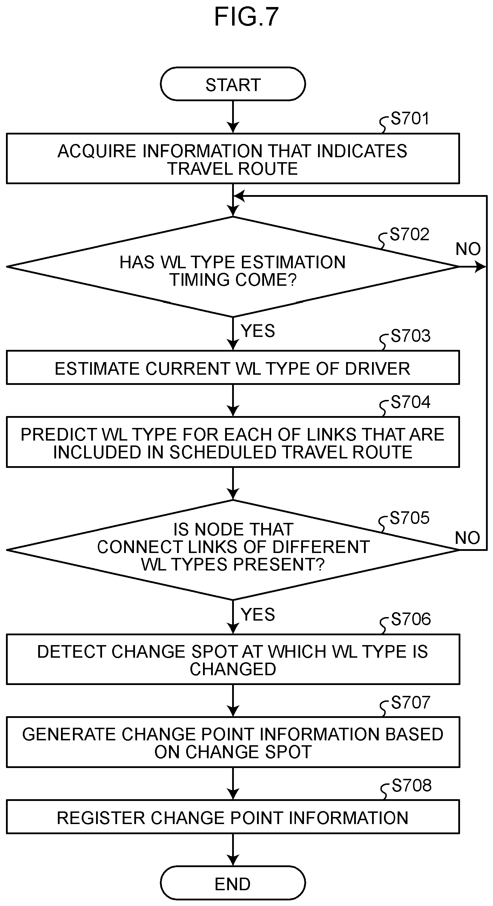

FIG. 7 is a flowchart illustrating the flow of generation of the change point information. FIG. 7 illustrates the flow of a method of generating the change point information that is explained above with reference to FIG. 5 and FIG. 6.

First, the acquisition unit 131 acquires information that indicates the travel route of the vehicle VE (Step S701). For example, the acquisition unit 131 acquires, as the information that indicates the travel route of the vehicle VE, information on the scheduled travel route that is a route in which the vehicle VE is scheduled to travel.

The estimation unit 132 determines whether or not a WL type estimation timing has come (Step S702). For example, the estimation unit 132 may determine that the WL type estimation timing has come when a predetermined period of time elapses since start of travel of the vehicle VE or when the vehicle VE travels predetermined distance since start of the travel.

When the WL type estimation timing has not yet come (Step S702; No), the estimation unit 132 waits until the WL type estimation timing comes.

In contrast, when the WL type estimation timing has come (Step S702; Yes), the estimation unit 132 estimates the degree of difficulty of the driver D (degree of difficulty in driving) in the link in which the vehicle VE is currently traveling based on the situation information that is acquired from the situation grasping engine 231 (Step S703).

Furthermore, the estimation unit 132 predicts the WL type for each of the links that are included in the scheduled travel route (Step S704). For example, the estimation unit 132 may compare the scheduled travel route and the map data, and estimate the WL type for each of the link that includes the current location of the vehicle VE, that is, the link in which the vehicle VE is currently traveling, and a link in which the vehicle VE is scheduled to travel after the current link. Meanwhile, the estimation unit 132 may determine the WL type that is estimated for the link in which the vehicle VE is currently traveling as the degree of difficulty of the driver D.

Subsequently, the generation unit 133 determines whether or not a node that connects links of the different WL types is present based on the estimation result that is obtained at Step S704 (Step S705). When the node that connects the links of the different WL types is not present (Step S705; No), the process goes to Step S702.

In contrast, when the node that connects the links of the different WL types is present (Step S705; Yes), the generation unit 133 detects the node as the change spot at which the WL type is changed (Step S706). The change spot at which the WL type is changed is one example of the change point at which the WL type is changed.

Further, the generation unit 133 generates the change point information based on the information on the change spot (Step S707). For example, the generation unit 133 calculates a distance from the current location to the change spot based on the current location of the vehicle VE and a distance of a link that is connected by the change spot at which the WL type is changed, and generates the calculated distance as the change point information. Furthermore, the generation unit 133 calculates the estimated time at which the vehicle VE is expected to arrive at the change spot based on the current location of the vehicle VE and a distance of the link that is connected by the change spot at which the WL type is changed, and generates the calculated estimated time as the change point information.

Moreover, the generation unit 133 registers the generated change point information in the control result storage unit 122 (Step S708).

### 8. Re-generation and distribution of change point information

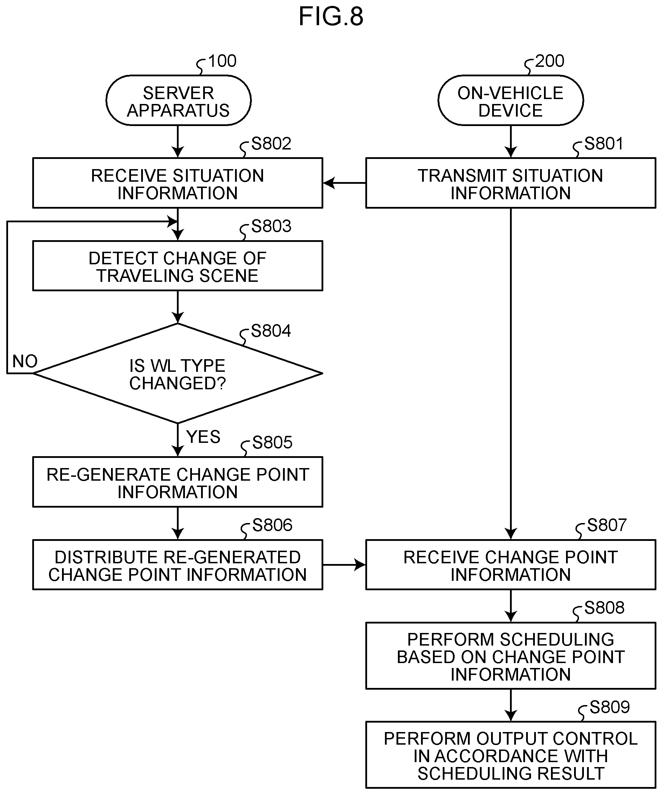

FIG. 8 is a flowchart illustrating the flow of a process related to re-generation of the change point information and distribution of the change point information.

As illustrated in FIG. 8, the situation grasping engine 231 of the on-vehicle device 200 may periodically transmit the situation information that is obtained from the sensor information or the like to the server apparatus 100 (Step S801). The situation information includes various kinds of information related to the travel state of the vehicle VE.

The detection unit 134 of the server apparatus 100 receives the situation information that is transmitted by the situation grasping engine 231 (Step S802).

Further, the detection unit 134 identifies a traveling scene of the vehicle VE based on the situation information, and detects a change of the traveling scene based on a prior traveling scene and a posterior traveling scene (Step S803).

For example, the detection unit 134 may detect, as the change of the traveling scene, a change of a driving behavior of the vehicle VE. As one example, the detection unit 134 may detect, as the change of the driving behavior of the vehicle VE, a large decrease in velocity, a large increase in velocity, temporary stop, stop, slow driving, a curve, sudden start, sudden braking, sharp turn, shock, or the like.

Furthermore, the detection unit 134 may detect, as the change of the traveling scene, whether or not the vehicle VE has entered a spot that corresponds to the change point at which the WL type is changed. For example, in the example illustrated in FIG. 6, the detection unit 134 may detect whether or not the vehicle VE has entered the change spot CP23 (the node ND23).

Moreover, the detection unit 134 may detect, as the change of the traveling scene, an attribute change based on a comparison between the attribute of the first link in which the vehicle VE is currently traveling and the attribute of the second link that is located in the traveling direction of the vehicle VE and that is connected to the first link among the links that are included in the scheduled travel route. For example, in the example illustrated in FIG. 5, it is assumed that the attribute of the link 102 in which the vehicle VE is currently traveling is the "wide road", the attribute of the link 103 that is connected to the link 102 is the "narrow road", and it is determined, in the guidance information DB in advance, that a change of the attribute from the "wide road" to the "narrow road" is to be notified at a guidance point in the link 102. In this case, the detection unit 134 is able to detect an attribute change from the "wide road" to the "narrow road" based on corresponding guidance information that is registered in the guidance information DB, and may detect a change of the traveling scene when the vehicle VE reaches the guidance point.

Furthermore, the detection unit 134 may detect, as the change of the traveling scene, whether or not the vehicle VE has entered an area that corresponds to a predetermined feature spot that is present in the link in which the vehicle VE is currently traveling among the links that are included in the scheduled travel route.

Subsequently, the determination unit 135 determines whether or not the WL type of the vehicle VE at the current time is changed based on the detection result that is obtained by the detection unit 134 (Step S804). For example, the determination unit 135 may detect, as the WL type of the vehicle VE at the current time, whether or not the degree of difficulty of the driver D in the link in which the vehicle VE is currently traveling is changed.

When it is determined that the WL type of the vehicle VE at the current time is not changed (Step S804; No), the process returns to Step S803.

In contrast, when it is determined that the WL type of the vehicle VE at the current time is not changed (Step S804; Yes), the generation unit 133 recognizes that necessity of update of the change point information that has been generated in the flow as illustrated in FIG. 7 is increased, and re-generates the change point information (Step S805).

For example, when the detection unit 134 detects the change of the traveling scene, the generation unit 133 recognizes that the velocity of the vehicle VE is highly likely to have been changed (that is, the estimated time is highly likely to have been changed (error is highly likely to have occurred)) between a time at which the change point information (estimated time) was calculated in the flow illustrated in FIG. 7 and a current time at which the change of the traveling scene is detected, and the estimated time needs to be re-calculated.

An example of a method of re-calculating the estimated time will be described below by using, as an example, a case in which the detection unit 134 detects, as the change of the traveling scene, "stop" of the vehicle VE and the determination unit 135 determines that the WL type of the vehicle VE at the current time is changed. For example, the generation unit 133 predicts a duration in which the vehicle VE stops. For example, the generation unit 133 may predict a duration in which the vehicle VE stops based on statistical information on a location at which the vehicle VE stops. For example, when the stop duration of the vehicle VE is predicted as "30 seconds", the generation unit 133 re-calculates the estimated time by adding "30 seconds" to the estimated time that is calculated in the flow illustrated in FIG. 7.

Referring back to FIG. 8, the distribution unit 136 distributes the change point information that is re-generated at Step S805 to the on-vehicle device 200 (Step S806). For example, the distribution unit 136 may distribute, as the re-generated change point information, a re-calculation result of the estimated time at which the vehicle VE is expected to arrive at the change spot.

The information matching engine 232 of the on-vehicle device 200 receives the change point information that is distributed by the distribution unit 136 (Step S807). Further, the information matching engine 232 performs scheduling for determining a time at which the content is output, based on the change point information (Step S808).

The output control unit 233 performs control such that the speaker SP outputs the content at the timing that is scheduled by the information matching engine 232 (Step S809).

### 9. Flow of scheduling process

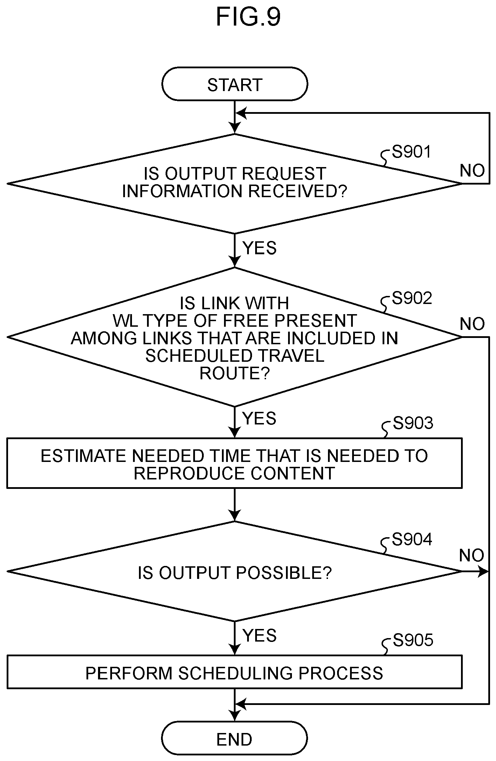

A flow of a scheduling process that is performed by the on-vehicle device 200 will be described below with reference to FIG. 9. FIG. 9 is a flowchart illustrating the flow of the scheduling process.

The information matching engine 232 determines whether or not the output request information is received from the application AP (Step S901). The output request information may include an output condition (a time condition for allowing output or a geographical condition for allowing output) and an output target content. When the output request information is not received (Step S901; No), the information matching engine 232 waits until the output request information is received.

In contrast, when the output request information is received (Step S901; Yes), the information matching engine 232 determines whether or not a link that is estimated to have the WL type of "FREE" is present among the links that are included in the scheduled travel route (Step S902). This process corresponds to a process of searching for a link (utterance allowed link) in which output of a content by voice is determined to be allowed from among the links that are included in the scheduled travel route. As a result of the search, when the link that is estimated to have the WL type of "FREE" is not present (Step S902; No), the information matching engine 232 may terminate the scheduling process.

In contrast, as a result of the search, when the link that is estimated to have the WL type of "FREE" is present (Step S902; Yes), the information matching engine 232 estimates a needed time that is needed to reproduce the content based on a reproduction duration of the content that is included in the output request information. (Step S903). The needed time described herein is a time that is needed from start of reproduction of the content to end of the reproduction.

Furthermore, the information matching engine 232 determines whether or not it is possible to output the content that is included in the output request information in the subject link based on the link that is estimated to have the WL type of "FREE" and the needed time (Step S904). For example, the information matching engine 232 may determine that it is possible to output the content that is included in the output request information when the duration of the link that is estimated to have the WL type of "FREE" is sufficiently longer than the needed time.

When it is difficult to output the content (Step S904; No), the information matching engine 232 may terminate the scheduling process. In contrast, when it is possible to output the content (Step S904; Yes), the information matching engine 232 determines a scheduled time at which the content is output, based on the change point information (Step S905). For example, the information matching engine 232 determines the scheduled time at which the content is output so as to meet the output condition that is included in the output request information.

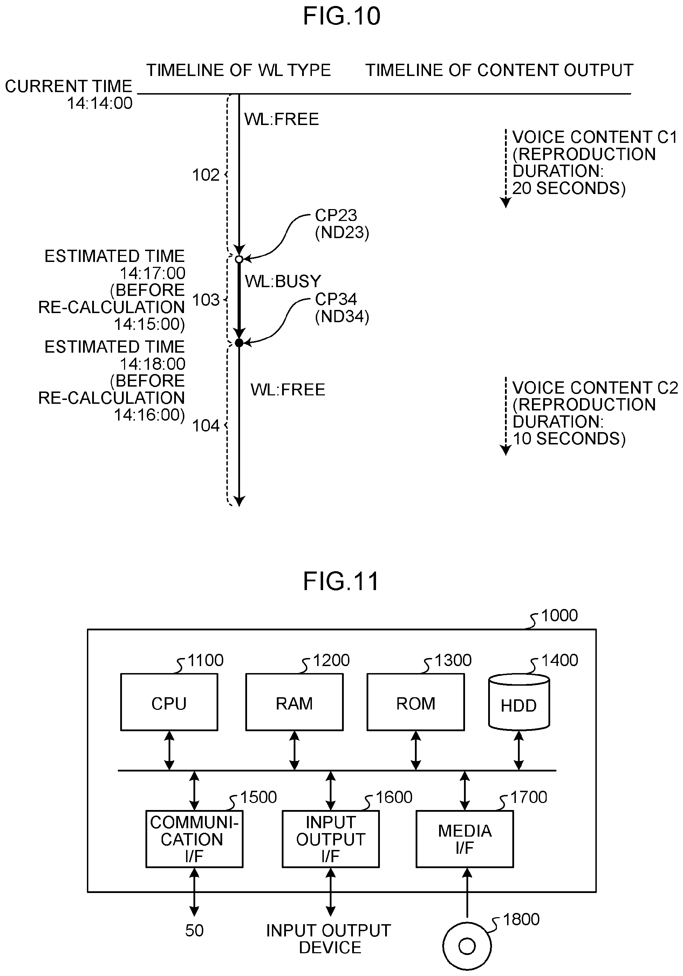

A scheduling process for determining the scheduled time at which the content is output will be described in detail below with reference to FIG. 10. FIG. 10 is a diagram illustrating a specific example of the scheduling process according to one embodiment.

In the example illustrated in FIG. 10, an example is illustrated in which, through a process that is performed when the vehicle VE is traveling in the location PT2, the estimated time at which the vehicle VE is expected to arrive at the change spot CP23 is calculated as "14:15" as the change point information that indicates the change spot CP23, and the estimated time at which the vehicle VE is expected to arrive at the change spot CP34 is calculated as "14:16" as the change point information that indicates the change spot CP34.

Furthermore, in the example illustrated in FIG. 15, when the vehicle VE travels further and at a time point at which the current time reaches "14:14", the generation unit 133 re-calculates the change point information such that the estimated time at which the vehicle VE is expected to arrive at the change spot CP23 is updated to "14:17" and the estimated time at which the vehicle VE is expected to arrive at the change spot CP34 is updated to "14:18".

In this example, the distribution unit 136 distributes the change point information that indicates the estimated time of "14:17" and the change point information that indicates the estimated time of "14:18" to the on-vehicle device 200.

Here, when receiving output request information on a content C1 and output request information on a content C2, the information matching engine 232 performs a process as in the flow illustrated in FIG. 9. For example, when determining that it is possible to output the content C1 in the link 102 by taking into account an output condition for the content C1, the information matching engine 232 may determine, as illustrated in FIG. 10, a time at which reproduction of the content C1 is completed before the estimated time of "14:17" as a scheduled time at which the content C1 is output.

Furthermore, when determining that it is possible to output the content C2 in the link 104 by taking into account an output condition for the content C2, the information matching engine 232 may determine, as illustrated in FIG. 10, a time at which reproduction of the content C2 is completed before the vehicle VE passes through the link 104 after the estimated time of "14:18", as a scheduled time at which the content C2 is output.

### 10. Modification

In the embodiment as described above, the example has been described in which the information matching engine 232 performs scheduling such that a content is output when the vehicle VE travels in a link that is estimated to have the WL type of "FREE". However, when a degree of importance of output of a content is determined, the information matching engine 232 may perform scheduling so as to output a content when the vehicle VE travels in a link that is estimated to have the WL type of "BUSY", depending on the degree of importance. For example, the information matching engine 232 may perform scheduling such that a content is output when the vehicle VE travels in the link that is estimated to have the WL type of "FREE" when the content is estimated to have the degree of importance of "low" and is estimated to have little influence even when the driver D fails to hear the content. In contrast, it is preferable for the information matching engine 232 to perform scheduling such that a content is output when the vehicle VE travels in a link that is estimated to have the WL type of "FREE" when the content has the degree of importance of "high" and is a useful content that needs to be heard by the driver D. Meanwhile, when the link that is estimated to have the WL type of "BUSY" is included in the living area of the driver D, the information matching engine 232 may perform scheduling such that a content for which the degree of importance is determined as "high" is output when the vehicle VE travels in the link with the WL type of "BUSY".

### 11. Hardware configuration

The server apparatus 100 (one example of the information processing apparatus) as described above may be implemented by, for example, a computer 1000 that has a configuration as illustrated in FIG. 11. FIG. 11 is a hardware configuration diagram illustrating an example of a computer that implements the functions of the server apparatus 100. The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, or the like.

The HDD 1400 stores therein a program that is executed by the CPU 1100, data that is used by the program, or the like. The communication interface 1500 receives data from a different device via a predetermined communication network, sends the data to the CPU 1100, and transmit data that is generated by the CPU 1100 to a different device via the predetermined communication network.

The CPU 1100 controls an output device, such as a display, and an input device, such as a keyboard, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the server apparatus 100 according to one embodiment, the CPU 1100 of the computer 1000 executes a program that is loaded on the RAM 1200, and implements the functions of the control unit 130. The CPU 1100 of the computer 1000 reads the program from the recording medium 1800 and executes the program; however, as another example, it is possible to acquire the program from a different apparatus via a predetermined communication network.

### 12. Others

Of the processes described in the embodiments above, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to the information illustrated in the drawings.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions. For example, a part or all of processes described as being performed by the server apparatus 100 may be performed by the on-vehicle device 200.

Furthermore, the embodiments as described above may be appropriately combined as long as processing contents do not conflict with each other.

Thus, embodiments of the present application have been described in detail above based on the drawings, but the embodiments are described by way of example, and the present invention may be made in various different modes with various modifications and improvement based on knowledge of a person skilled in the art, in addition to the embodiments described in the section of the disclosure of the invention.

### Reference Signs List

- 1: system

- 100: server apparatus
- 120: storage unit
- 121: map information storage unit
- 122: control result storage unit
- 130: control unit
- 131: acquisition unit
- 132: estimation unit
- 133: generation unit
- 134: detection unit
- 135: determination unit
- 136: distribution unit
- 200: on-vehicle device
- 231: situation grasping engine
- 232: information matching engine
- 233: output control unit

## Claims

1. An information processing apparatus comprising:
an estimation unit that estimates, based on a scheduled travel route that is a route in which a vehicle is scheduled to travel, an operation load type for each of road sections that are included in the scheduled travel route; and
a generation unit that generates information that indicates a change point at which the operation load type is changed in the scheduled travel route, based on a current location of the vehicle, a distance of each of the road sections, and the operation load type of each of the road sections.

2. The information processing apparatus according to claim 1, when road sections that are adjacent to each other among the road sections are estimated to have different operation load types, the generation unit generates, as the information that indicates the change point, distance information that indicates a distance from the current location of the vehicle to a connection point at which the road sections that are adjacent to each other are connected.

3. The information processing apparatus according to claim 1, wherein when road sections that are adjacent to each other among the road sections are estimated to have different operation load types, the generation unit generates, as the information that indicates the change point, time information that indicates an estimated time at which the vehicle is expected to arrive at a connection point at which the road sections that are adjacent to each other are connected from the current location of the vehicle.

4. The information processing apparatus according to claim 1, wherein the information that indicates the change point includes type information that indicates the operation load type of a current road section that includes the current location of the vehicle.

5. The information processing apparatus according to claim 1, wherein a change of the operation load type is one of a change from a type indicating that the operation load is higher than a reference value to a type indicating that the operation load is lower than the reference value and a change from the type indicating that the operation load is lower than the reference value to the type indicating that the operation load is higher than the reference value.

6. The information processing apparatus according to claim 1, further comprising:
a determination unit that determines whether or not the operation load type at a current time corresponding to the vehicle is changed based on a travel state of the vehicle, wherein
when the operation load type at the current time corresponding to the vehicle is changed, the generation unit re-generates the information that indicates the change point.

7. The information processing apparatus according to claim 6, further comprising:
a detection unit that detects a change of a traveling scene based on the travel state of the vehicle, wherein
the determination unit determines whether or not the operation load type at the current time corresponding to the vehicle is changed based on whether or not the change of the traveling scene is detected.

8. The information processing apparatus according to claim 7, wherein
the detection unit detects a change of a driving behavior of the vehicle as the change of the traveling scene, and
when it is detected that the driving behavior of the vehicle is changed, the determination unit determines that the operation load type at the current time corresponding to the vehicle is changed.

9. The information processing apparatus according to claim 7, wherein
the detection unit detects, as the change of the traveling scene, whether or not the vehicle has entered a spot that corresponds to the change point at which the operation load type is changed, and
when it is detected that the vehicle has entered the spot, the determination unit determines that the operation load type at the current time corresponding to the vehicle is changed.

10. The information processing apparatus according to claim 7, wherein
the detection unit detects, as the change of the traveling scene, an attribute change based on a comparison between a first road attribute that is an attribute of a first road section in which the vehicle is currently traveling among the road sections and a second road attribute the is an attribute of a second road section that is located in a traveling direction of the vehicle and that is connected to the first road section, and
when the attribute change is detected, the determination unit determines that the operation load type at the current time corresponding to the vehicle is changed.

11. The information processing apparatus according to claim 7, wherein
the detection unit detects, as the change of the traveling scene, whether or not the vehicle has entered an area that corresponds to a predetermined feature spot that is located in a first road section in which the vehicle is currently traveling among the road sections, and
when it is detected that the vehicle has entered the area, the determination unit determines that the operation load type at the current time corresponding to the vehicle is changed.

12. The information processing apparatus according to claim 7, wherein the generation unit predicts a duration in which the traveling scene that has changed continues based on statistical information on the changed traveling scene, and re-generates the information that indicates the change point by using a prediction result of duration.

13. The information processing apparatus according to claim 1, further comprising:
a determination unit that determines a scheduled time at which the content is output based on the information that indicates the change point and a reproduction duration of the content that is output by voice.

14. The information processing apparatus according to claim 13, wherein the determining unit determines a target content that is output at the scheduled time based on a relationship between the operation load type and a degree of importance that is determined for the content.

15. An information processing method that is implemented by an information processing apparatus, the information processing method comprising:
an estimation step of estimating, based on a scheduled travel route that is a route in which a vehicle is scheduled to travel, an operation load type for each of road sections that are included in the scheduled travel route; and
a generation step of generating information that indicates a change point at which the operation load type is changed in the scheduled travel route, based on a current location of the vehicle, a distance of each of the road sections, and the operation load type of each of the road sections.

16. An information processing program that is implemented by an information processing apparatus, the information processing program causing the information processing apparatus to perform:
an estimation step of estimating, based on a scheduled travel route that is a route in which a vehicle is scheduled to travel, an operation load type for each of road sections that are included in the scheduled travel route; and
a generation step of generating information that indicates a change point at which the operation load type is changed in the scheduled travel route, based on a current location of the vehicle, a distance of each of the road sections, and the operation load type of each of the road sections.
